# EUROPÄISCHE PATENTSCHRIFT

(11) **EP 1 609 273 B1**
(45) Veröffentlichungstag und Bekanntmachung des Hinweises auf die Patenterteilung: **28.05.2008**
(21) Anmeldenummer: 04719357.8
(22) Anmeldetag: 11.03.2004
(51) Int. Cl.: H04L 12/437, H04L 12/42

(54) **KOMMUNIKATIONSSYSTEM MIT REDUNDANTER KOMMUNIKATION**
COMMUNICATION SYSTEM WITH REDUNDANT COMMUNICATION
SYSTEME DE COMMUNICATION A COMMUNICATION REDONDANTE

(30) Priorität: 22.03.2003 DE 10312907
(43) Veröffentlichungstag der Anmeldung: 28.12.2005
(73) Patentinhaber: Bosch Rexroth AG, 70184 Stuttgart (DE)
(72) Erfinder: RUG, Volker, 64720 Michelstadt (DE); KÜBERT, Jochen, 97753 Karlstadt (DE); SCHULTZE, Stephan, 97816 Lohr am Main (DE)
(86) Internationale Anmeldenummer: PCT/DE2004/000485
(87) Internationale Veröffentlichungsnummer: WO 2004/084451

(56) Entgegenhaltungen:
- US-A- 4 536 876
- US-A- 4 663 748
- US-A- 5 363 366
- US-B1- 6 466 591

## Beschreibung

### Technisches Gebiet

Die Erfindung betrifft einen Teilnehmer zur Verwendung in einem Kommunikationssystem sowie ein solches Kommunikationssystem mit zumindest in einem Teilabschnitt redundanter Kommunikation zur Erhöhung der Fehlertoleranz bei gleichzeitig hoher Dynamik des Kommunikatiorissystems.

### Stand der Technik

Kommunikationssysteme finden sich in vielen technischen Anwendungen. So werden zentral oder dezentral gesteuerte, verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise ein Synchron- oder Asynchromnotor, sein, mit der eine von mehreren, zueinander interpolierenden oder eng miteinander gekoppelt arbeitenden Achsen angetrieben wird. Typische Anwendungsfälle solcher Automatisierungssysteme mit dezentraler Steuerungs- und Antriebstechnik sind Druck- oder auch Werkzeugmaschinen sowie auch Robotersysteme mit einer Vielzahl von zeitlich zueinander abgestimmt arbeitenden Förder- und Wirkelementen.

Verteilte Kommunikationssysteme umfassen zumindest zwei, in der Regel jedoch weitaus mehr Teilnehmer, die vorzugsweise hierarchisch mit einem als Zentralteilnehmer ausgebildeten Teilnehmer und den übrigen Teilnehmern als Nebenteilnehmern des Kommunikationssystems angeordnet sind. Eine solche hierarchische Anordnungsstruktur ist beispielsweise als Master-Slave-Struktur mit dem Zentralteilnehmer als 'Master' oder Master-Teilnehmer und den Nebenteilnehmem als ,Slaves' oder Slave-Teilnehmer bekannt. Üblicherweise generiert der Zentralteilnehmer . Steuersignale, die über Kommunikationsleitungen an die Nebenteilnehmer versendet werden. Umgekehrt können aber auch die Nebenteilnehmer Signale generieren und anderen Nebenteilnehmern oder dem Zentralteilnehmer zusenden.

Oftmals ist ein solches Kommunikationssystem in einer Ringstruktur angeordnet. Ein von dem Zentralteilnehmer generiertes Signal wird von dem Zentralteilnehmer , in eine die Teilnehmer verbindende Kommunikationsleitung eingespeist und durchläuft anschließend die Ringstruktur, wobei die Nebenteilnehmer in serieller Reihenfolge durchlaufen werden.

Aktuell ist von dem Anmelder ein solches Kommunikationssystem mit ringförmiger Struktur unter der Bezeichnung SERCOS interface^{®} auf dem Markt erhältlich, welches über einen Zentralteilnehmer Steuerungssignale an Nebenteilnehmei generiert und sendet. Die Nebenteilnehmer sind üblicherweise mittels Lichtwellenleiter mit dem Zentralteilnehmer verbunden. Bevorzugt wird dieses Kommunikationssystem zur Regelung und Steuerung von verteilt angeordneten Motoren, beispielsweise von Synchron- oder Asynchronmotoren, eingesetzt. Die Nebenteilnehmer des Kommunikationssystems können dann beispielsweise als Regelgeräte zur Regelung und Steuerung jeweils eines Motors ausgeführt sein oder in diese Regelgeräte integriert sein. Dieses Kommunikationssystem ist insbesondere in Werkzeugmaschinen, Druckmaschinen, Wirkmaschinen und Maschinen der allgemeinen Automatisierungstechnik derzeit weit verbreitet. In vorzugsweise äquidistanten Zeitschritten wird von dem Zentralteilnehmer ein Synchronisationstelegramm oder Synchronisationssignal generiert und in den Kommunikationsring eingespeist. An den Empfang des Synchronisationstelegramms oder des Synchronisationssignals ist in den Regelgeräten üblicherweise über einen Zeitparameter eine Soll-/Istwertverarbeitung angekoppelt, die zu einer Bestimmung und Ausgabe von Steuer- und Regelparametern an die jeweiligen Stellmotoren führt.

Aufgrund der seriellen Übertragungsweise von Kommunikationsinformation von einem Teilnehmer zu dem jeweils nachgeordneten Teilnehmer beinhaltet dieses auf dem Markt erhältliche System jedoch den Nachteil, dass bei einem auftretenden. Streckenfehler, beispielsweise bei Ausfall eines Teilnehmers oder bei Ausfall der Kommunikationsverbindung zwischen zwei Teilnehmern; alle im System nachfolgenden Teilnehmer keine weitere Kommunikationsinformation erhalten.

Um hier eine Erhöhung der Fehlertoleranz zu schaffen, wird in der Dissertationsschrift, "Fehlertolerantes Kommunikationssystem für hochdynamische Antriebsregelungen" von Stephan Schultze, Darmstädter Dissertation, 1995 die Verwendung einer Doppelringtopologie vorgeschlagen.

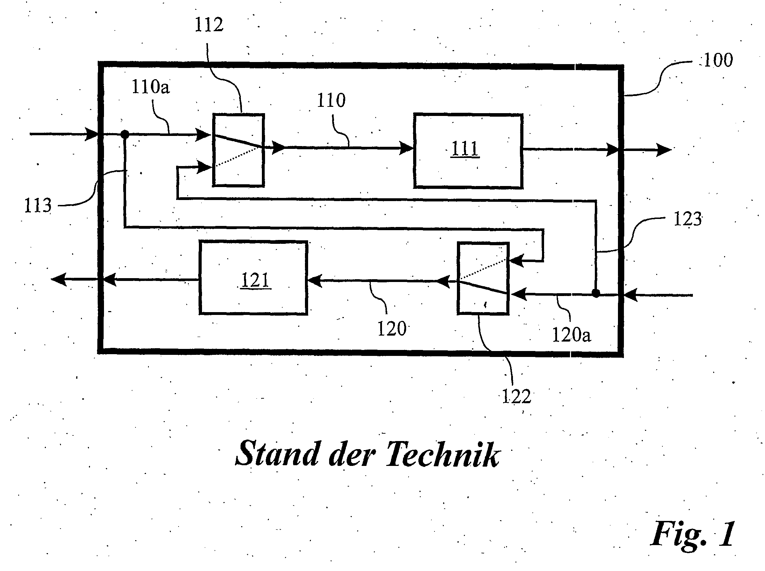

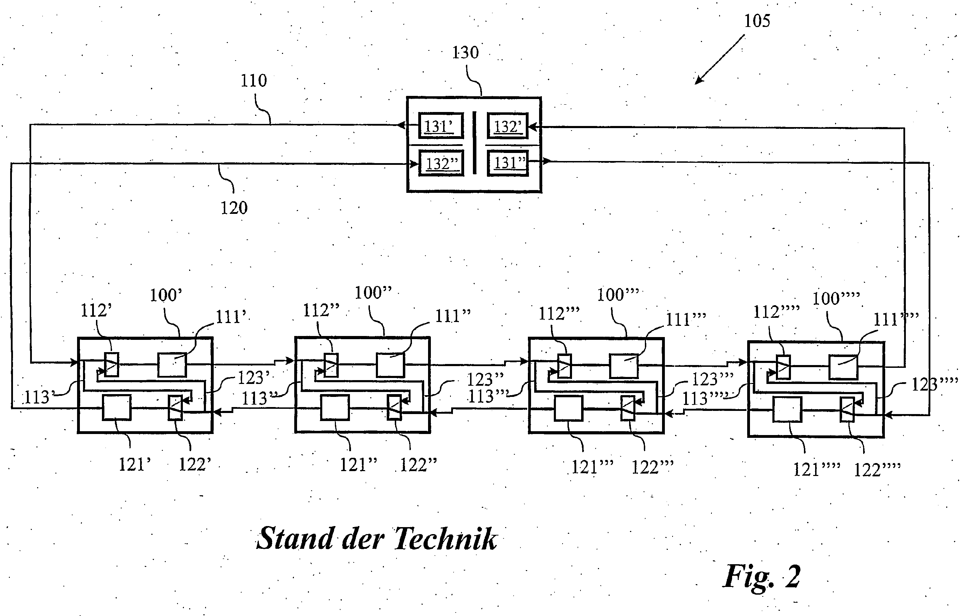

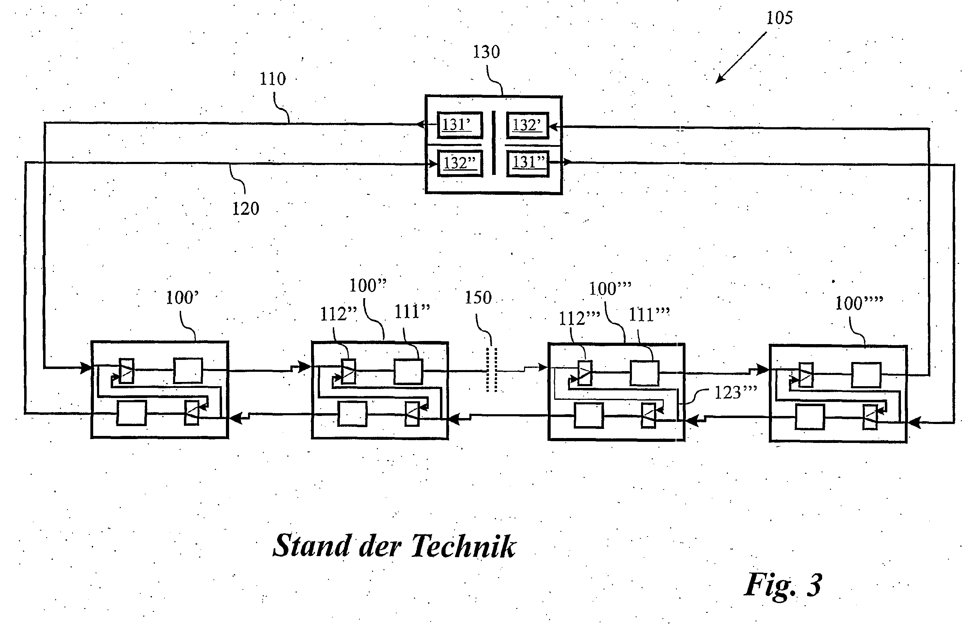

Wie in Figur 2 dargestellt, umfasst die Doppelringtopologie zwei gegenläufig arbeitende Kommunikationsringe 110, 120, die jeweils an dem Zentralteilnehmer 130 beginnen und auch enden. In jeden der beiden Kommunikationsringe 110, 120 wird ausgehend von dem Zentralteilnehmer 130 dieselbe und somit redundante Kommuüikationsinformation an die Nebenteilnehmer 100', 100", 100"', 100"" versendet. Die Informationssignale durchlaufen die Ringtopologie jeweils längs den in Figur 2 dargestellten Kommunikationspfaden. Die Aufschaltung des Zentralteilnehmers auf die beiden Ringe erfolgt je Kommunikationsring voneinander unabhängig über jeweils eine Sendeeinheit 131', 131" und eine Empfangseinheit 132', 132". In dem Zentralteilnehmer ist somit keine unmittelbare Kopplung der Kommunikationsringe gegeben. Die Nebenteilnehmer 100', 100", 100"', 100"" hingegen weisen, wie insb,esondere Figur 1 gut zu entnehmen ist, jeweils zwei Kopplungsverbindungen 113', 123'; 113", 123", 113"', 123"'; 113"", 123"" in Form von "Kurzschlussbügeld' zwischen den Kömmunikationspfaden 110 und 120 auf. Die Kurzschlussbügel sind jeweils an dem ersten Ende in einem Signaleingangsbereich des Nebenteilnehmers des jeweiligen Kommunikationspfades unmittelbar mit der einen Kommunikationsleitung verbunden und sind jeweils an dem zweiten Ende an einen zweiten Eingang eines Multiplexers (MUX) 112', 122'; 112", 122"; 112"', 122"'; 112"", 122"" angeschlossen. An den jeweils ersten Eingang des Multiplexers ist die Kommunikationsleitung des jeweiligen Kommunikatiorispfades angeschlossen. In einer Ausgangskonfiguration des Kommunikationssystems ist der jeweilige Kommunikätionspfad über den Multiplexer durchgeschaltet. Jeweils hinter dem Multiplexer ist eine Verarbeitungseinheit, hier eine HDLC-Einheit 111', 121'; 111 ", 121"; 111 "', 121"'; 111"", 121"" (HDLC = High level data link control= Protokollvereinbarung zur Datenübertragung), angeordnet, die mit dem jeweils von dem Multiplexer durchgeschaltetem Signal beaufschlagt wird. Tritt nun zwischen zwei Nebenteilnehmern - in Figur 3 zwischen den Nebenteünehmem 100" und 100"' - beispielsweise ein wie in Figur 3 dargestellter Streckenfehler 150 in Form einer Unterbrechung der Kommunikationsleitung eines Kommunikationspfades - in Figur 3 des Kommunikationspfades 110 - auf, so kann der Eingang des in dem betroffenen Kommunikationspfad angeordneten Multiplexers des dem Streckenfehler in Signallaufrichtung nachgeordneten Teilnehmers - hier der Multiplexer 112'" des Nebenteilnehmers 100"' - umgeschaltet werden, so dass das an dem Kurzschlussbügel anliegende Signal des anderen Kommunikationsringes 120 dem dem Multiplexer nachgeordneten Abschnitt des von dem Streckenfehler betroffenen Kommunikationsrings 110 aufgeschaltet wird. Somit kann im Falle des Auftretens eines Streckenfehlers das Kommunikationssystem in einfacher Weise rekonfiguriert werden und ein dauerhafter Ausfall eines größeren Abschnitts des Kommunikationssystems oder sogar einem Gesamtausfall des Kommunikationssystems vermieden werden.

Es hat sich jedoch herausgestellt, dass die in der Dissertationsschrift von Stephan Schultze vorgeschlagene Lösung beim Einsatz in hochdynamischen Kommunikationssystemen nur bedingt einsetzbar ist. Insbesondere bei sehr hohen Übertragungsraten des Kommunikationssystems ist die Umschaltung und Signalüberwachung der Signale beider Ringe durch eine eigens hierzu vorgesehene Hardwareschaltung problematisch. Insbesondere kann dies beispielsweise dazu fuhren, dass die redundante Übertragung des Signals von einem Kommunikationsring auf den anderen Kommunikationsring nicht mit einer ausreichend hohen Dynamik erfolgt, um den Anforderungen in hochdynamischen Steuerungssystemen zu genügen.

Ein gattungsgemäßes Kömmunikationssystem ist aus der US-A-4663748 bekannt.

Die US-A-5363366 beschreibt im Rahmen eines Kommunikationssystems die Verwendung einer Flankenerkennung zur Feststellung eines Eingangssignals.

Schließlich beschreibt die US-A-4536876 die Verwendung der Übertragung von Bitströmen für den Fall, dass eine eingehende Signalaktivität auf einem niedrigen Pegel vorliegt, d.h. eine Anzahl aufeinanderfolgender Nicht-Übertragungen festzustellen ist. Diese Druckschrift beschreibt nicht die Verwendung von Nullbits.

### Darstellung der Erfindung

Der Erfindung liegt somit die Aufgabe zugrunde, einen Teilnehmer eines Kommunikationssystems zur Verfügung zu stellen, bei dem zur Absicherung eines Streckenfehlers eine redundante Signalübertragung erfolgt. Der Teilnehmer soll hierbei ein im Vergleich zum Stand der Technik verbessertes dynamisches Betriebsverhalten insbesondere auch im Fall des Auftretens eines Streckenfehlers aufweisen. Ferner ist es eine Aufgabe der Erfindung, ein Kommunikationssystem mit einem verbesserten dynamischen Verhalten zur Verfügung zu stellen.

Diese Aufgaben werden erfindungsgemäß durch den Teilnehmer gemäß Anspruch1 sowie das Kommunikationssystem gemäß, Anspruch 13 gelöst. Weitere vorteilhafte Ausgestaltungen der Erfindung finden sich in den Unteransprüchen.

Der erfindungsgemäße Teilnehmer, der als Teilnehmer eines Kommunikationssystems verwendet werden kann, umfasst zumindest einen ersten so wie einen zweiten Kommunikationspfad. In dem Kommunikationssystem sind die Kommunikationspfade hierzu vorzugsweise in einer Doppelringtopologie angeordnet, die zweckmäßig gegenläufig arbeitet. Dem ersten Kommunikationspfad ist in dem Teilnehmer eine erste Verarbeitungseinheit zur Verarbeitung der über den ersten Kommunikationspfad erhaltenen Informationssignale und/oder zur Erzeugung und Versendung von Informationssignalen über den ersten Kommunikationspfad zugeordnet. Dem zweiten Kommunikationspfad ist in dem Teilnehmer eine zweite Verarbeitungseinheit zur Verarbeitung der über den zweiten Kommunikationspfad erhaltenen Informationssignale und/oder zur Erzeugung und Versendung von Informationssignalen über den zweiten Kommunikationspfad zugeordnet. Vorteilhaft sind die Verarbeitungseinheiten jeweils in den jeweiligen Kommunikationspfaden zwischengeschaltet. Um einen in dem zweiten Kommunikationspfad des Kommunikationssystems aufgetretenen Streckenfehler zu überbrücken, ist ferner in dem Teilnehmer eine erste aktivierbare Kopplung zwischen dem ersten Kommunikationspfad und dem zweiten Kommunikationspfad dergestalt angeordnet, dass bei aktivierter Kopplung Informationssignale von dem ersten Kommunikationspfad auf den zweiten Kommunikationspfad übertragen werden, wobei die Informationssignale hierzu von dem ersten Kommunikationspfad abgegriffen und dem zweiten, dem von dem Streckenfehler betroffenen Kommunikationspfad zugeführt werden. Die Zuführung der ersten aktivierbaren Kopplung erfolgt in dem Teilnehmer in Signallaufrichtung hinter der Verarbeitungseinheit des zweiten Kommunikationspfades. Die Verarbeitungseinheit prüft erfindungsgemäß das Eingangssignal auf Vorhandensein und im Teilnehmer ist eine Phasenregelschleife zur Phasenaufbereitung des empfangenen Informationssignals vorgesehen.

Erfindungsgemäß ist eine Prüfung auf Vorhandensein eines Eingangssignals am Teilnehmer so realisiert, dass das Eingangssignal eines Teilnehmers mittels einer Flankenerkennung im Teilnehmer geprüft wird. Hiermit ergibt sich eine recht preiswert und einfache Realisierbarkeit, z.B. mittels Zähler. In einem Teilnehmer sind z. B. zwei unabhängige Zähler bzw. Flankenerkennungen vorhanden. Diese werden vom Empfangsschrittakt inkrementiert und von einer eintreffenden Flanke zurückgesetzt. Im fehlerfreien Betrieb entspricht der Abstand zwischen zwei aufeinanderfolgenden Flanken dann einem fixen Zählerstand. Bei einem größeren Zählerstand kann man davon ausgehen, dass ein Streckenfehler vorliegt. Das entspricht in etwa der üblichen Arbeitsweise eines Watchdog-Timers.

Es ist erfindungsgemäß ferner vorgesehen, dass die Teilnehmer in der Lage sind im Rahmen der bereits erwähnten Prüfung auf Vorhandensein eines Signals einen Nullbitstrom für nachfolgende Teilnehmer zu erzeugen. Dies kann dazu genutzt werden, dass nur der dem Fehler physikalisch nachfolgende Teilnehmer aktiv wird und die nachfolgenden Teilnehmer, denen ja auch das Eingangssignal fehlt, nicht ebenfalls ihre Umschaltmechanismen aktivieren und somit einen nicht unmittelbar an ihrem Eingang vorliegenden Fehler als solchen fehl interpretieren. Weiterhin ist es sinnvoll erst ab einem bestimmten Zählerstand den Nullbitstrom zu senden, um einen vorübergehenden Signalaussetzer nicht fälschlicherweise als kritischen Fehler zu behandeln. In der erfindungsgemäßen Ausgestaltung wird zum Beispiel erst ab einem Zählerstand von 16 Bitzeiten der Nullbitstrom zugeschaltet. Das bedeutet, dass 16 Bitzeiten lang keine Flanke am Eingang lag. Technisch bewirkt der Nullbitstrom wegen seines aufeinanderfolgenden Flankenwechsels (NRZI-Kodierung) ein Rücksetzen der Zähler aller nachgeschalteten Teilnehmer, so dass deren Vorabschaltung nicht aktiv wird (siehe auch vorhergehenden Abschnitt). Ein Fehler wird dann höheren Protokollschichten zur Einleitung einer Abhilfe übergeben, z.B. einer Rekonfiguration.

Zweckmäßig ist des weiteren auch der Abgriff der ersten aktivierbaren Kopplung in dem Teilnehmer in Signallaufrichtung hinter der Verarbeitungseinheit des ersten Kommunikationspfades angeordnet.

Ein in dieser Weise erfindungsgemäß ausgeführter Teilnehmer kann als Zentralteilnehmer oder als Nebenteilnehmer in einem zentral oder auch dezentral gesteuerten Kommunikationssystem beispielsweise zur Regelung und Steuerung einer Antriebseinheit oder einer Mehrzahl von Antriebseinheiten eingesetzt werden. Wie auch aus der aus dem

Stand der Technik bekannten Dissertationsschrift "Fehlertolerarites Kommunikationssystem für hochdynamische Antriebsregelungeh" von Stephan Schultze, Darmstädter Dissertation, 1995, bekannt, dient auch im Rahmen der Erfindung der zumindest in einem Abschnitt doppeltausgeführte Kommunikationspfad der Verbesserung der Fehlertoleranz. Besonders bevorzugt ist das Kommunikationssystem hierzu in einer geschlossenen Doppelringtopologie ausgeführt. Über jeden der Kommunikationspfade wird dem Teilnehmer von dem Zentralteilnehmer oder einem Nebenteilnehmer aus derselbe Steuerbefehl oder dasselbe Informationssignal zugesendet, so dass die Signalinformation dem jeweiligen Teilnehmer in einer Ausgangskonfiguration des Kommunikationssystems zweifach und somit redundant zueinander zugeht.

Die Verarbeitung des über einen Kommunikationspfad in dem Teilnehmer eintreffenden Signals erfolgt in der jeweils dem Kommunikationspfad zugeordneten Verarbeitungseinheit. Um die über die beiden Kommunikationspfade getrennt und unabhängig voneinander eingetroffenen Informationssignale auf Richtig- bzw. Vollständigkeit zu überprüfen, erfolgt durch die Verarbeitungseinheiten ein vergleichender Abgleich der beiden eingegangenen Signale, bevor die eingegangene Signalinformation beispielsweise in Form eines Steuerungssignals an ein Antriebsregelungsgerät weitergegeben wird. Neben der über den Abgleich der beiden Signale erzielten Signalverifikation bietet ein Kommunikationssystem mit doppelt ausgeführter Kommunikationsleitung und gegenläufig arbeitender Kommunikation insbesondere auch den Vorteil, dass auch in dem Fall, dass die Kommunikation über eine der beiden oder auch beide Kommunikationsleitungen gestört ist, die Steuerungs- und Informationssignale immer noch über die zweite Kommunikationsleitung in dem Teilnehmer eintreffen. Ein in Doppelringtopologie ausgeführtes, zweckmäßig gegenläufig arbeitendes .Kommunikationssystem weist somit im Vergleich zu einer Einfachringtopologie eine erhöhte Fehlertoleranz auf.

Zur Erhöhung der Fehlertoleranz können in zumindest einem Abschnitt des Kommunikationssystems natürlich auch mehr als zwei Kommunikationspfade parallel zueinander angeordnet sein. Durch die Anordnung von drei oder mehr Kommunikatiorispfaden kann zwar die Redundanz der Signalübertragung erhöht und die Streckenfehleranfälligkeit weiter vermindert werden, die Kosten für ein solches Kommunikationssystem steigen jedoch überproportional im Vergleich zu den erzielten' Verbesserungen. Auch wenn die Erfindung im weiteren nur für Kommunikationssysteme mit zumindest in einem Abschnitt doppelt ausgebildeten Kommunikationspfaden erläutert wird, ist die Erfindung jedoch keineswegs nur auf solche Kommunikationssysteme beschränkt, sondern es kann hier auch eine .größere Anzahl von Kommunikationspfaden in zumindest einem Abschnitt des Kommunikationssystems vorgesehen sein. Der in den Ansprüchen gewählte Wortlaut umfasst somit auch solche Systeme mit einer in zumindest einem Teilabschnitt größeren Anzahl von Kommunikationspfaden.

Um im Falle des Auftretens eines Streckenfehlers in dem zweiten Kommunikationspfad des erfindungsgemäß ausgeführten Teilnehmers - beispielsweise dem Ausfall eines in den zweiten Kommunikationspfad integrierten Bauteils eines weiteren Teilnehmers, der in Srgnallaufrichtung in dem zweiten Kommunikationspfad vor dem betrachteten Teilnehmer angeordnet ist, öder einer Unterbrechung der, zu dem betrachteten Teilnehmer führenden Signalleitung - demjenigen Teil des Kommunikationspfades, der der Stelle, an der der Streckenfehler aufgetreten ist, in Signallaufrichtung nachgeordnet ist, das Informationssignal erneut zuzuführen und den Streckenfehler somit quasi zu annullieren, kann das Informationssignal über Aktivierung der ersten aktivierbaren Kopplung von dem ersten Kommunikationspfad abgegriffen und auf den zweiten Kommunikationspfad übertragen werden. Der zweite Kommunikationspfad des Teilnehmers kann im Falle des Auftretens eines Streckenfehlers somit während des Betriebs des Teilnehmers in einem Kommunikationssystem durch Aktivierung der ersten aktivierbaren Kopplung rekonfiguriert werden.

Die Zuführung der ersten aktivierbaren Kopplung zur Einleitung des Informationssignals in den zweiten Kommunikationspfad ist erfindungsgemäß in dem Teilnehmer in Signallaufrichtung hinter der Verarbeitungseinheit des zweiten Kommunikationspfades angeordnet. Vorzugsweise ist des weiteren auch der Abgriff der ersten aktivierbaren Kopplung in dem Teilnehmer in Signallaufrichtung hinter der Verarbeitungseinheit des ersten Kommunikationspfades angeordnet.

Im Vergleich zu der aus der Dissertationsschrift von Stephan Schultze bekannten Lösung stellte es sich heraus, dass der in der beschriebenen Weise erfindungsgemäß ausgeführte Teilnehmer ein deutlich verbessertes dynamisches Verhalten aufweist. Das über den ersten Kommunikationspfad dem erfindungsgemäß ausgeführten Teilnehmer zugeführte und in den Teilnehmer eingekoppelte Informationssignal wird unabhängig davon, ob in dem zweiten Kommunikationspfad ein Streckenfehler aufgetreten ist oder nicht, nach der Einkopplung des Signals unmittelbar der ersten Verarbeitungseinheit des Teilnehmers zugeführt und in dieser signalverarbeitet. Tritt nun in dem zweiten Kommunikationspfad in Signallaufrichtung des zweiten Kommunikationspfades vor dem Teilnehmer ein Streckenfehler auf, so wird infolge der erfindungsgemäßen Anordnung, der Zuführstelle der ersten aktivierbaren Kopplung in Signallaufrichtung hinter der zweiten Verarbeitungseinheit des Teilnehmers der zweiten Verarbeitungseinheit auch nach der Rekonfiguration der Kommunikationspfade weiterhin kein Informationssignal zugeführt. Üblicherweise wird das Eingangssignal in der Verarbeitungseinheit auf Signalqualität und Vorhandensein geprüft. Signalausfälle können somit von der Verarbeitungseinheit detektiert werden. Im Vergleich zu der aus der Dissertationsschrift von Stephan Schultze bekannten Lösung stellte sich heraus, dass diese Signalüberprüfung (vor dem Multiplexer) mit einer speziellen Logik durchgeführt werden muss, wodurch sich der Aufwand erhöht.

Bei Verwendung einer optimierten Verarbeitungseinheit ist diese spezielle Logik einfacher ausführbar als bei eigens hierzu konstruierter Logik innerhalb von programmierbaren Logikbausteinen.

Da somit hier nur die erste Verarbeitungseinheit ein gesendetes Informationssignal erhält, entfällt auch ein Abgleich der in den beiden Verarbeitungseinheiten eines Teilnehmers eintreffenden Informationssignale, wie dies im Betrieb ohne Streckenfehler zweckmäßig üblich ist. Ein in der ersten Verarbeitungseinheit eintreffendes Informationssignal kann somit unmittelbar in ein Steuerungssignal umgesetzt werden, ohne dass zunächst auf das Eintreffen des Informationssignals in der anderen Verarbeitungseinheit gewartet werden muss, um einen Abgleich der empfangenen Signale durchzuführen. Somit tritt auch im Rekonfigurationsfall keine Verschlechterung des dynamischen Verhaltens des Teilnehmers auf. Bei der aus der Dissertationsschrift von Stephan Schultze bekannten Lösung hingegen durchläuft sowohl das in dem ersten Kommunikationspfad geführte Signal als auch das abgegriffene, dem zweiten Kommunikationspfad zugeführte Signal nach der Einkopplung in den Teilnehmer zunächst jeweils einen Multiplexer bevor es in die jeweilige Verarbeitungseinheit gelangt. Hierbei tritt sowohl beim Durchlaufen des Multiplexers als auch infolge des nach- der Verarbeitung erfolgenden Abgleichs jeweils eine Signalbeeinflussung verbunden mit einer Verschlechterung des Signals auf.

Des weiteren ist bei der erfindungsgemäßen Lösung vorteilhaft auch der Abgriff der ersten aktivierbaren Kopplung in dem Teilnehmer in Signallaufrichtung hinter der Verarbeitungseinheit des ersten Kommunikationspfades angeordnet. Auch hierdurch wird einerseits das dynamische Verhalten verbessert, da das Durchlaufen beispielsweise einer als Abgriff dienenden Signalweiche erst hinter der Verarbeitungseinheit erfolgt. Andererseits wird durch die Anordnung des Abgriffs hinter der Verarbeitungseinheit darüber hinaus vermieden, dass das Informationssignal vor einer Verarbeitung über eine möglicherweise auftretende Rückwirkung über die erste aktivierbare Kopplung verfälscht werden kann. Zweckmäßig umfasst die erste aktivierbare Kopplung eine Zwischenverbindungsleitung zur Verbindung des ersten Kommunikationspfades mit dem zweiten Kommunikationspfad und ein in die Zwischenverbindungsleitung als auch in den zweiten Kommunikationspfad zwischengeschaltetes Umschaltelement.

Während das Informationssignal zwischen den Teilnehmern üblicherweise als ein optisches Lichtsignal mittels Lichtwellenleiter transportiert wird, wird es beim Eintritt in den Teilnehmer in ein elektrisches Signal umgewandelt und innerhalb des Teilnehmers als elektrisches Signal transportiert , und verarbeitet. Insofern kann die Zwischenverbindungsleitung vorteilhaft als einfache elektrische Leiterbahn zur Leitung von elektrischem Strom ausgeführt sein. Das Umschaltelement ist vorzugsweise als .Multiplexer mit zwei Eingängen und einem Ausgang ausgeführt, wobei die Eingänge selektiv auf den Ausgang schaltbar sind. Somit kann durch Umschalten des Multiplexers der Eingang auf die Zwischenverbindungsleitung umgeschaltet werden, so dass über die Zwischenverbindungsleitung Strom von dem ersten Kommunikationspfad auf den zweiten Kommunikationspfad geleitet wird.

In einer bevorzugten Ausführungsform der Erfindung ist in dem Teilnehmer neben der einen, ersten aktivierbaren Kopplung eine weitere, zweite aktivierbare Kopplung zwischen den Kommunikationspfaden so angeordnet, dass bei Aktivierung der ersten Kopplung Informationssignale von dem einen, ersten Kommunikationspfad auf den anderen, zweiten Kommunikationspfad und bei Aktivierung der zweiten Kopplung Informationssignale von dem zweiten Kommunikationspfad auf den ersten Kommunikationspfad übertragen werden. Auch die zweite aktivierbare Kopplung ist hierzu in Signalleitungsrichtung hinter der Verarbeitungseinheit des zweiten Kommunikationspfades angeordnet. Aufbau, Funktionsweise und Wirkweise der zweiten aktivierbaren Kopplung entsprechen der ersten aktivierbaren Kopplung. Während die erste aktivierbare Kopplung im Falle des Auftretens eines Streckenfehlers im zweiten Kommunikationspfad aktiviert, wird, wird die zweite aktivierbare Kopplung im Falle des Auftretens eines Streckenfehlers im ersten Kommunikationspfad aktiviert. Beide Kommunikationspfade des Teilnehmers sind somit gegen das Auftreten eines Streckenfehlers abgesichert. Jedes in dem Teilnehmer eintreffende Informationssignal durchläuft nach der Einkopplung zunächst die jeweilige, dem Kommunikationspfad zugeordnete Verarbeitungseinheit und wird hier verarbeitet, bevor es nach der Verarbeitung die Abgreifstelle der einen aktivierbaren Kopplung und die Einleitstelle der anderen aktivierbaren Kopplungen durchläuft. Im Vergleich zu der aus der Dissertationsschrift von Stephan Schultze bekannten Lösung weist der erfindungsgemäße Teilnehmer durch die Anordnung der aktivierbaren Kopplungen jeweils hinter den Verarbeitungseinheiten sowohl in der Ausgangskonfiguration des Kommunikationssystems als auch im Rekonfigurationsfall des Kommunikationssystems ein deutlich verbessertes dynamisches Verhalten auf.

Der erfindungsgemäße Teilnehmer kann als Nebenteilnehmer in einem zentralen oder dezentralen Kommunikationssystem angeordnet werden. Bevorzugt sind alle Nebenteilnehmer eines Kommunikationssystems erfindungsgemäß ausgeführt, so dass hierdurch eine Absicherung des gesamten Kommunikationssystems gegen Streckenfehler gegeben ist.

In einer besonders vorteilhaften Ausführung ist aber auch der Zentralteilnehmer eines Master-Slave-Kommunikationssystems gemäß der Erfindung ausgeführt, so dass auch der Zentralteilnehmer gegen eventuelle Streckenfehler abgesichert ist. 1

In einem weiteren Aspekt sieht die Erfindung ein Kommunikationssystem zur gerichteten Kommunikation zwischen Teilnehmern des Kommunikationssystems vor, wobei das erfindungsgemäße Kommunikationssystem einen Zentralteilnehmer und zumindest einen Nebenteilnehmer, vorzugsweise eine Vielzahl von Nebenteilnehmern, umfasst. Hiervon mit umfasst sind auch solche Kommunikationssysteme, bei denen die Aufgabe des Zentralteilnehmers abwechselnd von Nebenteilnehmern übernommen wird. Zumindest einer der Teilnehmer, vorzugsweise alle Nebenteilnehmer und besonders bevorzugt alle Teilnehmer des Kommunikationssystems sind in der oben beschriebenen Weise mit einer aktivierbaren Kopplung, vorzugsweise jeweils mit einer der Anzahl der Kommunikationspfade entsprechenden Anzahl von aktivierbaren Kopplungen, ausgeführt. Ein solches Kommunikationssystem kann zur Steuerung hochdynamischer Antriebsregelungen verwendet werden, wobei zusätzlich eine hohe Fehlertoleranz gegenüber im Betrieb auftretenden Streckenfehlern gegeben ist. Im Vergleich zu aus dem Stand der Technik bekannten Kommunikationssystemen weist das erfindungsgemäße Kommunikationssystem eine verbesserte Dynamik auf. Auch kann der Zentralteilnehmer gemäß der Erfindung gegen auftretende Streckenfehler abgesichert werden.
Zweckmäßig ist das Kommunikationssystem in Doppelringtopologie mit jeweils ringförmig geschlossenen Kommunikationspfaden ausgeführt. Durch die Schließung des jeweiligen Kommunikationspfades ist eine gerichtete Kommunikation längs des Kommunikationspfades möglich, wobei aber dennoch jeder Teilnehmer mit jedem anderen Teilnehmer kommunizieren kann.

Ferner kann ein von einem Teilnehmer gesendetes Informationssignal die Ringtopologie vollständig durchlaufen, bis dieses wieder in demjenigen Teilnehmer eintrifft, der das Signal gesendet hat. Der sendende Teilnehmer kann somit bei Wiedereintreffen des Signals überprüfen, ob das Signal alle weiteren Teilnehmer durchlaufen hat.

Zweckmäßig ist das erfindungsgemäße Kommunikationssystem als dezentrales Steuerungssystem mit einer Master-Slave-Struk-tur mit dem Zentralteilneluner als Master und den Nebenteilnehmern als Slaves ausgeführt. Aufgrund der sehr guten dynamischen Eigenschaften und der Fehlertoleranz eignet sich das erfindungsgemäße Kommunikationssystem insbesondere zur Steuerung und Regelung einer Vielzahl von zueinander synchron arbeitenden Antrieben.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: ein Prinzipschaltbild eines aus dem Stand der Technik bekannten Teilnehmers eines Kommunikationssystems;
- Figur 2: die Topologie eines aus dem Stand der Technik bekannten Kommunikationssystems;
- Figur 3: das Kommunikationssystem aus Figur 2 im Rekonfigurationsfall infolge eines Streckenfehlers;
- Figur 4: in einem Prinzipschaltbild den Aufbau eines erfindungsgemäß ausgeführten Teilnehmers eines Kommunikationssystems;
- Figur 5: die Topologie eines erfindungsgemäß ausgeführten Kommunikationssystems;
- Figur 6: eine erste Rekonfigurationsschaltung des erfindungsgemäßen Kommunikationssystems aus Figur 5 bei einem zwischen den Nebenteilnehmern aufgetretenen Streckendoppelfehler;
- Figur 7: eine weitere Rekonfigurationsschaltung des erfindungsgemäßen Kommunikationssystems aus Figur 5 bei einem zwischen den Nebenteilnehmem aufgetretenen Streckeneinfachfehler;
- Figur 8: eine weitere Rekonfigurationsschaltung des erfindungsgemäßen Kommunikationssystems aus Figur 5 bei einem zwischen dem Zentralteilnehmer und einem Nebenteilnehmer aufgetretenen. Streckendoppelfehler;
- Figur 9: eine weitere Rekonfigurationsschaltung des erfindungsgemäßen Kommunikationssystems aus Figur 5 bei einem zwischen dem Zentralteilnehmer und einem Nebenteilnehmer aufgetretenen Streckeneinfachfehler am Ausgang des Zentralteilnehmers;
- Figur 10: eine weitere Rekonfigurationsschaltung des erfindungsgemäßen Kommunikationssystems aus Figur 5 bei einem zwischen dem Zentralteilnehmer und einem Nebenteilnehmer aufgetretenen Streckeneinfachfehler am Eingang des Zentralteilnehmers.

In den Figuren sind nur die für das Verständnis der Erfindung wesentlichen Elemente und Bauteile in schematisierter Darstellung wiedergegeben.
Gleiche oder gleichwirkende Bauteile sind in den Figuren weitgehend mit gleichen Bezugszeichen gekennzeichnet.

### Wege zur Ausführung der Erfindung

In Figur 1 ist in einem Prinzipschaltbild der aus der Dissertationsschrift "Fehlertolerantes Kommunikationssystem für hochdynamische Antriebsregelungen" von Stephan Schultze, Darmstädter Dissertation, 1995 bekannte Slave-Teilnehmer 100, auf den bereits Eingangs Bezug genommen wurde, dargestellt. Zur Erhöhung der Fehlertoleranz sind in dem Teilnehmer 100 zwei gegenläufige Kommunikationspfade 110, 120 realisiert. Ferner umfasst der Slave-Teilnehmer zwei voneinander getrennt arbeitende Signal- bzw. Datenverarbeitungseinheiten 111, 121 zur Signalverarbeitung, wobei die erste Verarbeitungseinheit 111 in den ersten Kommunikationspfad 110 und die zweite Verarbeitungseinheit 121 in den zweiten Kommunikationspfad 120 zwischengeschaltet ist. Ein über den ersten Kommunikationspfad 110 eingehendes Informationssignal wird in der ersten Verarbeitungseinheit . 111 verarbeitet, während ein über den zweiten Kommunikationspfad 120 eingehendes Informationssignal in der zweiten Verarbeitungseinheit 121 verarbeitet wird. In Figur 1 nicht dargestellt ist, dass die Verarbeitungseinheiten die eingehenden Informationssignale gegeneinander abgleichen, so dass mittels der doppelt vorgesehenen Kommunikationspfade und der doppelten Signalverarbeitung eine Redundanz des eingehenden Informationssignals für den Slave-Teilnehmer 100 gegeben ist.
Des weiteren sind in dem Slave-Teilnehmer 100 zwei Kopplungsverbindungen 113, 123 in Form von "Kurzschlussbügeln" zwischen den Kommunikationspfaden 110, 120 angeordnet. Die Kurzschlussbügel 113, 123 zweigen jeweils in Signallaufrichtung vor der jeweiligen Verarbeitungseinheit 111, 121 von dem jeweiligen Kommunikationspfad 110 oder 120 ab und sind an dem anderen Ende an einen zweiten Eingang eines in den jeweils anderen Kommunikationspfad 120 oder 110 integrierten Multiplexers (MUX) 122, 112 angeschlossen. An den jeweils ersten Eingang des jeweiligen Multiplexers 112, 122 ist die Kommunikationsleitung 110a, 120a des jeweiligen Kommunikationspfades .110, 120 angeschlossen.
In einer Ausgangskonfigur.ation des Slave-Teilnehmers sind die Kommunikationspfade 110, 120 der betreffenden Kommunikationsringe über die Multiplexer 112, 122 durchgeschaltet. Tritt jedoch beispielsweise in einem Kommunikationssystem zwischen einem in einem Kommunikationssystem in Signallaufrichtung vorangehend angeordneten Teilnehmer und dem , betrachteten Teilnehmer ein Streckenfehler auf, so dass an einem Eingang des Teilnehmers kein Signal mehr eingeht, so kann der Eingang des Multiplexers, der dem Streckenfehler in Signallaufrichtung nachgeordnet ist, umgeschaltet werden, so dass das an dem Kurzschlussbügel anliegende Signal des anderen Kommunikationspfades der dem Multiplexer nachgeordneten Verarbeitungseinheit aufgeschaltet wird. Somit kann im Falle des Auftretens eines Streckenfehlers das Kommunikationssystem in einfacher Weise rekonfiguriert werden, ohne dass es zu einem dauerhaften Ausfall von größeren Teilen des Kommunikationssystems oder sogar zu einem Gesamtausfall des Kommunikationssystems käme.

In Figur 2 ist die Topologie eines ebenso in der Dissertationsschrift "Fehlertolerantes Kommunikationssystem für hochdynamische Antriebsregelungen" von .Stephan Schultze beschriebenen Kommunikationssystems 105 dargestellt. Das Kommunikationssystem 105 ist als Master-Slave-Kömmunikationssystem mit einem 'Master' 130 als Zentralteilnelu:ner und einer Vielzahl von Nebenteilnehmern, sogenannten 'Slaves' 100', 100", 100'" und 100"", in einer Doppelringtopologie ausgeführt. Die Slaves sind jeweils gemäß dem in Figur 1 dargestellten Teilnehmer ausgeführt. Über jeden der beiden Ringe 110, 120 der Doppelringtopologie findet jeweils eine gerichtete Kommunikation zwischen dem Master und den Slaves statt. Anfangs- und Endpunkt eines Kommunikationssignals ist hierbei jeweils der Master. Ausgehend von dem Master durchläuft ein von dem Master generiertes erstes Steuerungssignal den Ring 110 im Gegenuhrzeigersinn, wohingegen ein zeitsynchron zu dem ersten Steuerungssignal von dem Master generiertes zweites Steuerungssignal den Ring 120 im Uhrzeigersinn durchläuft. Bei Erreichen eines Slaves wird das gesendete Steuerungssignal jeweils zunächst in den jeweiligen Slave eingekoppelt und anschließend in der zugeordneten Verarbeitungseinheit 111', 121'; 111", 121"; 111"', 121'" sowie 111"", 121"" verarbeitet. Nach der Verarbeitung wird das verarbeitete Steuerungssignal in den Slaves 100', 100", 100'" und 100"" jeweils zu einer in Figur 2 nicht dargestellten Auskopplungseinheit geführt und gelangt von dort über eine. Zwischenverbindungsleitung des Kommunikationspfades zu dem jeweiligen in Signallaufrichtung nächsten Teilnehmer.
Tritt jedoch ein Streckenfehler auf, wie dies beispielsweise in Figur 3 in Form eines Einfach-Streckenfehlers 150 durch Unterbrechung der Kommunikationsleitung zwischen dem Slave 100" und dem Slave 100"' in Ring 110 der Fall ist, so besitzt das Kommunikationssystem die Fähigkeit, eine Rekonfiguration der Kommunikationspfade 110 und 120 durchzuführen, ohne dass es zu einem Ausfall des gesamten Kommunikationssystems kommt. Hierzu wird lediglich derjenige Kurzschlussbügel, der in denjenigen Multiplexer einmündet, der dem Streckenfehler in Signallaufrichtung nachgeordnet ist, über den Multiplexer aufgeschaltet.
Hierdurch erfolgt eine Überleitung des in dem jeweils anderen Ring geführten Signals, das zu dem Signal, -das in dem von dem Streckenfehler betroffenen Ring geführt wird, redundant ist. In Figur 3 ist ein solcher Rekonfigurationszustand nach Auftreten des Streckenfehlers 150 dargestellt. Der in dem ersten Ring 110 zwischengeschalte Multiplexer 112" des Slaves 100" ist auf den Kurzschlussbügel-Eingang umgeschaltet, so dass hierdurch die den Ring 120 durchlaufenden Informationssignale der Verarbeitungseinheit 111'" des Slaves 100"' in den, Ring 110 aufgeschaltet werden.
Der jeweils aktive Signalpfad ist in Figur 3 wie auch in den nachfolgenden Figuren mit einer breiten Strichstärke gekennzeichnet; der jeweils inaktive Signalpfad mit einer dünneren Strichstärke.

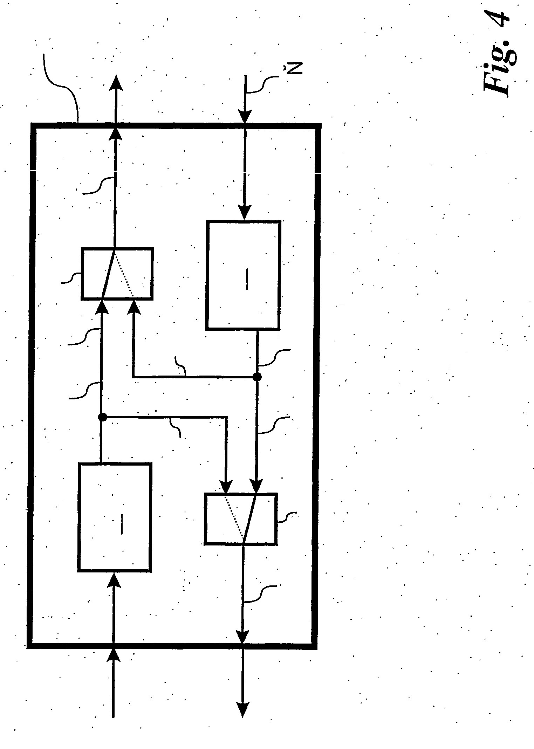

In Figur 4 ist in einem Prinzipschaltbild der Aufbau eines erfindungsgemäß ausgeführten Teilnehmers 1 eines Kommunikationssystems dargestellt, der im Einsatz in einem Kommunikationssystem im Vergleich zu den aus dem Stand der Technik bekannten Teilnehmern verbesserte dynamische Eigenschaften und somit eine verbesserte Echtzeitfähigkeit aufweist.
In dem hier dargestellten Teilnehmer 1 sind zwei parallel zueinander angeordnete, gegenläufig arbeitende Kommunikationspfade 10, 20 vorgesehen. In dem ersten, dem in Figur 4 oberen Kommunikationspfad 10 wird ein Informationssignal von links nach rechts transportiert, während in dem zweiten, in Figur 4 unteren Kommunikationspfad 20 ein Informationssignal von rechts nach links transportiert wird. Der in Figur 4 dargestellte Teilnehmer 1 ist somit für eine Verwendung in einem Kommunikationssystem mit Doppelringtopologie und mit gerichteter, gegenläufiger Kommunikation geeignet.
In jeden der beiden Kommunikationspfade 10, 20 ist jeweils eine Verarbeitungseinheit 11 und 21 zur Verarbeitung eingehender Informationssignale zwischengeschaltet. Die Verarbeitungseinheiten 11 und 21 sind hier jeweils als Mikroprozessorsysteme zur Kommunikations-Protokollverarbeitung, vorzugsweise zur HDLC-Verarbeitung (HDLC = 'High Level Data Link Protokol'), ausgeführt. In dem hier dargestellten Beispiel kommt als Verarbeitungseinheit jeweils ein ASIC unter dem Namen SERCON 816 der Firma ST Microelectronics zum Einsatz.
Den Verarbeitungseinheiten 11, 21 ist in Signallaufrichtung jeweils des weiteren ein Multiplexer 12 und 22 in dem erfindungsgemäßen Teilnehmer 1 nachgeordnet und in den jeweiligen Kommunikationspfad 10, 20 zwischengeschaltet. Jeder der Multiplexer 12, 22 weist zwei Eingänge und einen Ausgang auf, wobei die Eingänge selektiv auf den Ausgang durchgeschaltet werden können. Ein jeweils erster Eingang der Multiplexer 12, 22 ist über eine jeweilige Zwischenverbindungsleitung 10a, 20a des jeweiligen Kommunikationspfades 10, 20 unmittelbar mit dem Ausgang der jeweils vorgeschalteten Verarbeitungseinheit 11; 21 verbunden. Der jeweilige Ausgang der Multiplexer 12, 22 ist jeweils mit einer weiterführenden Verbindungsleitung 10b, 20b des betreffenden Kommunikationspfades 10, 20 verbunden.
In der Ausgangskonfiguration des Teilnehmers 1 sind die jeweils ersten Eingänge der Multiplexer jeweils auf die Ausgänge der Multiplexer durchgeschaltet, um so einen durchgängigen Signallaufweg längs des jeweiligen Kommunikationspfades. 10 und 20 bereitzustellen.

Um im Falle des Auftretens eines Streckenfehlers den Signallaufweg so rekonfigurieren zu können, dass das Informationssignal, das in dem zu dem von dem Streckenfehler betroffenen Kommunikationspfad jeweils anderen Kommunikationspfad geführt wird, auf den von dem Streckenfehler betroffenen Kommunikationspfad umgeleitet wird, ist jeweils der zweite Eingang der Multiplexer 12, 22 mit einer jeweils weiteren Zwischenverbindungsleitung 23; 13 verbunden. Die Zwischenverbindungsleitungen 13, 23 sind wiederum mit ihrem jeweils anderen Ende mit dem jeweils anderen Kommunikationspfad verbunden, so dass das in dem jeweils anderen Kommunikationspfad geführte Informationssignal über die jeweilige Zwischenverbindungsleitung 13 oder 23 dem jeweils zweiten Eingang des jeweiligen Multiplexers zugeführt wird. Die Verbindungsstellen, an denen die Zwischenverbindungsleitungen mit den Kommunikationspfaden verbunden sind, befinden sich jeweils zwischen den jeweiligen Verarbeitungseinheiten 11 und 21 der Kommunikationspfade 10 und 20 und den in den Kommunikationspfaden zwischengeschalteten Multiplexern 12 und 22.
Tritt somit in einem der Kommunikationspfade, 10 oder 20 in Signallaufrichtung vor dem erfindungsgemäßen Teilnehmer 1 oder auch innerhalb des Teilnehmers 1 in einem Bereich bis zu der jeweiligen Verarbeitungseinheit 11, 21 ein Streckenfehler auf - beispielsweise durch Unterbrechung der Leitung oder Ausfall eines in die Leitung zwischengeschalteten Bauteils so schaltet nach einer Erkennungsphase derjenige Multiplexer 12 oder 22, der in dem von dem Streckenfehler betroffenen Kommunikationspfad 10 oder 20 dem Streckenfehler nachgeordnet ist, auf den zweiten Eingang um. Hierdurch wird dafür gesorgt, dass der dem Multiplexer nachgeordnete Abschnitt des Kommunikationspfades wieder mit einem aus dem anderen. Kommunikationspfad abgezweigten Informationssignal beaufschlagt wird und somit nachgeordnete Teilnehmer ordnungsgemäß weiter betrieben werden können. Ein in einem Kommunikationspfad auftretender Streckenfehler führt somit üblicherweise lediglich zu einer Beeinträchtigung der Betriebsweise der dem Streckenfehler in dem betreffenden Kommunikationspfad unmittelbar nachgeordneten Verarbeitungseinheit.

Im Vergleich zu der aus der Dissertationsschrift von Stephan Schutze bekannten und in Figur 1 dargestellten Lösung weist der Teilnehmer aus Figur 4 verbesserte dynamische Eigenschaften auf. Tritt beispielsweise in dem in Figur 4 unteren Kommunikationspfad 20 in der Kommunikationsleitung 20d vor dem Teilnehmer 1. ein Streckenfehler auf, so erhält die untere Verarbeitungseinheit 21 des unteren Kommunikationspfades 20 kein Informationssignal mehr. Das Informationssignal gelangt jedoch nach wie vor über den intakten oberen Kommunikationspfad 10 in den Teilnehmer 1 und wird hier unmittelbar nach dem Eintritt in den Teilnehmer in der oberen Verarbeitungseinheit 11 signalverarbeitet. Ein Abgleich der in den Verarbeitungseinheiten 11 und 21 empfangenen und verarbeiteten Signale vor dem Aussenden etwaiger in den Verarbeitungseinhciten auf der Basis des empfangenen Informationssignals generierten Steuerungssignale an eine oder mehrere angeschlossene Steuerungseinheit (beispielsweise ein oder mehrere Steuerungsgeräte zur Steuerung von Elektromotoren) entfällt in diesem. Fall jedoch zwangsläufig, wodurch die Dynamik des Teilnehmers 1 auch im Falle des Auftretens eines Streckenfehlers nicht verschlechtert wird.
Auch durchläuft das Informationssignal des oberen Kommunikationspfades 10 den Multiplexer 12 erst nach der Verarbeitung in der Verarbeitungseinheit 11, so dass Verzögerungszeiten, die durch den Signallauf durch den Multiplexer 12 verursacht werden, keine Verzögerung der Verarbeitung des Informationssignals in dem Teilnehmer 1 bedingen. Durch die erfindungsgemäße Ausführung der Teilnehmer des Kommunikationssystems bzw. des Kommunikationssystems wird die Stabilität des Kommunikationssystems bzw. die Robustheit der Redundanz erhöht. Ein in dieser Weise ausgeführtes Kommunikationssystem kann auch für Übertragungsraten größer als 4 Mbit/s bzw. 16 Mbit/s bei hinreichender Stabilität des Kommunikationssystems verwendet werden.

Üblicherweise erfolgt die Leitung des Informationssignals zwischen den Teilnehmern über Lichtwellenleiter. Hierzu wird das Informationssignal von einer Sendeeinheit als optisches Lichtsignal aufbereitet und in den Lichtwellenleiter eingespeist. Innerhalb des jeweiligen Teilnehmers ist es jedoch zweckmäßig, das Informationssignal als elektrisches Signal weiterzuleiten und zu verarbeiten. Um das Informationssignal von einem optischen Signal in ein elektrisches Signal umzuwandeln, ist in dem Teilnehmer im Eingangsbereich eines jeden Kommunikationspfades zweckmäßig jeweils ein Empfänger, vorzugsweise ein optischer Empfänger, zum Empfang und Einkoppeln der ankommenden Informationssignale aus dem Kommunikationspfad in den Teilnehmer angeordnet. In Figur 4 sind diese Empfänger nicht dargestellt.
Ferner ist in jedem Kommunikationspfad des erfindungsgemäßen Teilnehmers am Austritt des Kommunikationspfades aus dem Teilnehmer zweckmäßig eine Auskopplungseinheit, vorzugsweise eine Leuchtdiode mit Ansteuerschaltung, zum Auskoppeln der Informationssignale aus dem Teilnehmer in den Kommunikationspfad angeordnet, die auch wiederum in Figur 4 nicht wiedergegeben sind.

In Figur 4 des weiteren auch nicht dargestellt ist, dass in jedem Kommunikationspfad des Teilnehmers zusätzlich zweckmäßig eine Phasenregelschleife zur Phasenaufbereitung des empfangenen Informationssignals üblicherweise in der jeweiligen Verarbeitungseinheit angeordnet ist. Die Phasenregelschleife, die bevorzugt als DPLL ausgeführt ist, führt mittels einer Überabtastung des elektrischen Informationssignals eine Signalflankenregenerierung durch.
In den in der Dissertationsschrift von Stephan Schultze aufgeführten Schaltungen durchläuft das Empfangssignal erst den Multiplexer, bevor es in der Verarbeitungseinheit regeneriert bzw. aufbereitet wird. Das den Multiplexer durchlaufende Signal wird hierbei verschlechtert. Dies ist insofern kritisch, als dass das wieder ins Elektrische gewandelte Signal an dieser Stelle die "schlechteste" Qualität aufweist und die Signalaufbereitung durch die Verarbeitungseinheit durch die weitere Verschlechterung erschwert wird.

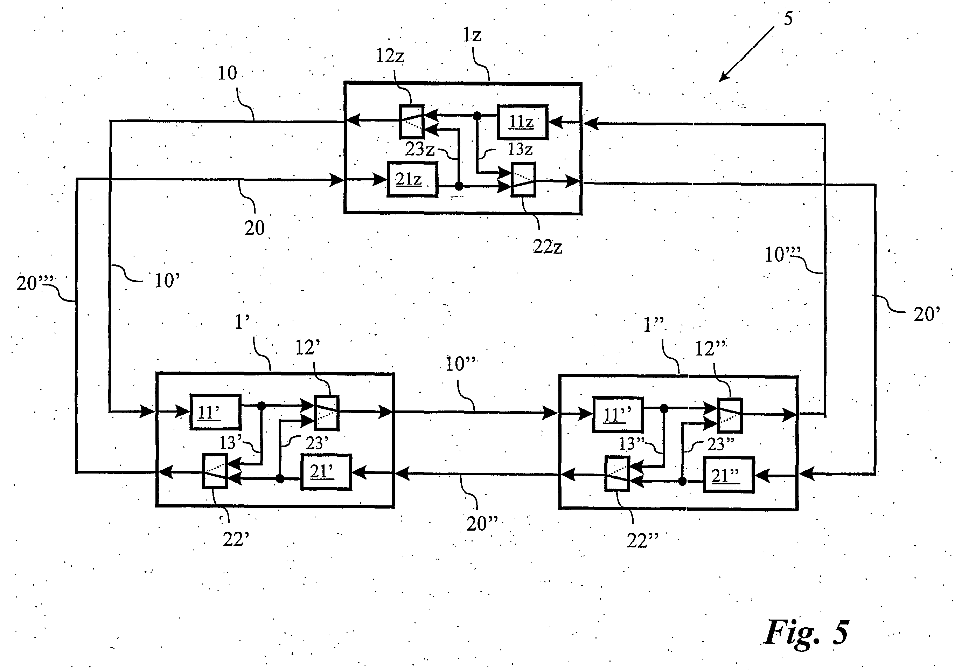

In Figur 5 ist die Topologie eines erfindungsgemäß ausgeführten Kommunikationssystems 5 dargestellt. Das hier dargestellte Kommunikationssystem 5 umfasst einen Zentralteilnehmer 1z und zwei Nebenteilnehmer 1', 1". Der Aufbau aller drei Teilnehmer entspricht hier dem Aufbau des in Figur 4 dargestellten, erfindungsgemäß ausgeführten Teilnehmers 1. Somit ist es auch möglich, dass die Funktion des Zentralteilnehmers auf einen der Nebenteilnehmer übergeht und umkehrt.
Das Kommunikationssystem 5 ist in einer Doppelringtopologie ausgeführt, d.h. es sind zwei Kommunikationspfade 10 und 20 vorgesehen, die jeweils an dem Zentralteilnehmer 1z beginnen und enden und somit jeweils einen geschlossenen Ring bilden. Die Kommunikation innerhalb eines Ringes erfolgt gerichtet, wobei die Kommunikationsrichtung der beiden Ringe zueinander gegenläufig ist.
Als Verbindungsleitungen 10', 10", 10''' und 20', 20", 20"' zwischen den Teilnehmern sind hier Lichtwellenleiter vorgesehen, die eine Übertragung eines Signals mit hoher Übertragungsgeschwindigkeit bei sehr hoher Signaltreue ermöglichen.

Die in Figur 5 dargestellten Teilnehmer 1z, 1", 1 " befinden sich alle in der jeweiligen Ausgangskonfiguration, d.h. alle Multiplexer 12z, 22z; 12', 22' und 12", 22" sind jeweils so geschaltet, dass die Kommunikationspfade 10, 20 durchgeschaltet sind und jeweils eine Ringkommunikation längs der geschlossenen Ringe 10 und 20 möglich ist.
Tritt jedoch ein Streckenfehler auf, so können die in Signallaufrichtung dem Streckenfehler nachgeordneten Multiplexer zur Rekonfiguration der Topologie jeweils umgeschaltet werden.

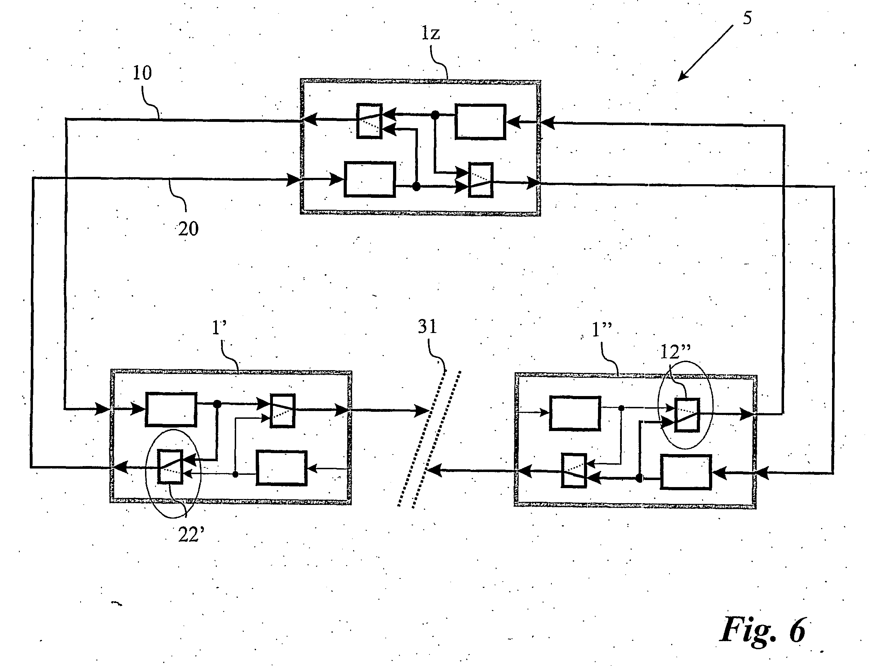

In Figur 6 ist eine solche Rekonfigurationsschaltung des erfindungsgemäß ausgeführten Kommunikationssystems 5 aus Figur 5 bei einem zwischen den Nebenteilnehmern 1', 1" aufgetretenen Streckendoppelfehler 31 wiedergegeben. Die Verbindungsleitungen beider Kommunikationspfade 10", 20" zwischen den NebenteiInehmem sind hier aufgrund einer Störung dürchtrennt. Somit kann kein Informationssignal, von dem einen Nebenteilnehmer unmittelbar zu dem anderen Nebenteilnehmer gelangen. Die jeweils in Signallaufrichtung dem Streckenfehler 31 nachgeordneten Multiplexer 22' und 12" werden nach einer Erkennungsphase zur Erkennung des Streckenfehlers umgeschaltet; so dass das Informationssignal des jeweils anderen Kommunikationspfades über den jeweiligen Multiplexer 22' und 12" in den von dem Streckenfehler betroffenen Kommunikationspfad jeweils in Signallaufrichtung hinter dem Streckenfehler 31 eingespeist wird. In Figur 6 sind die umgeschalteten Multiplexer jeweils durch einen Kreis gekennzeichnet. Die jeweils wirksamen Signalpfade sind hier wiederum mit einer dickeren Strichstärke ausgezogen, während die unwirksamen Pfade mit einer dünneren Strichstärke wiedergegeben sind.
In der Erkennungsphase zur Erkennung des Streckenfehlers wird über zumindest eine Taktrate des Informationssignals auf das Eintreffen eines Informationssignals gewartet, bevor der Multiplexer umgeschaltet wird. Geeignete Erkennungsverfahren sind aus dem Stand der Technik bekannt.

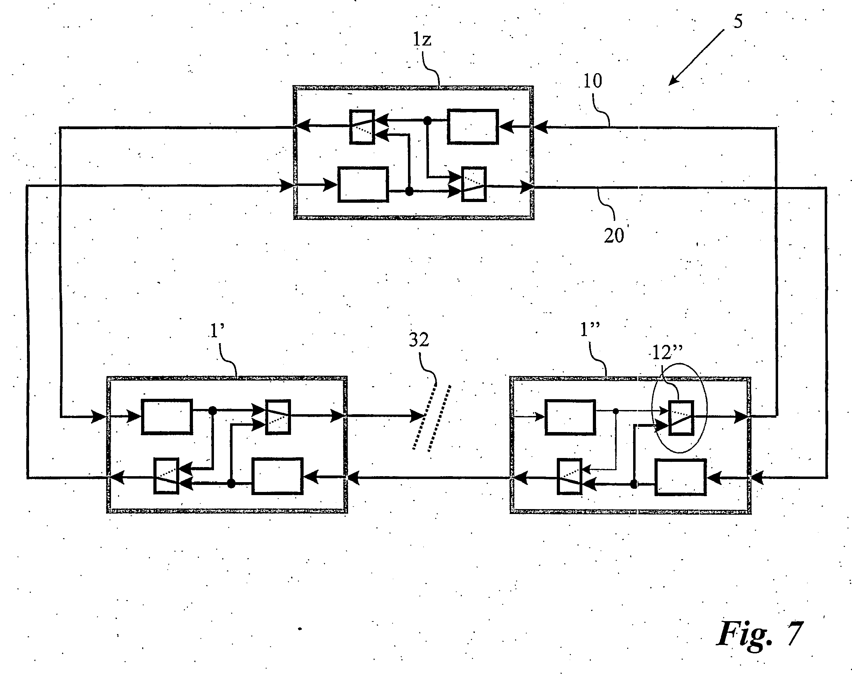

In Figur 7 ist eine weitere Rekonfigurationsschaltung des erfindungsgemäßen Kommunikationssystems aus Figur 5 bei einem zwischen den Nebenteilnehmern aufgetretenen Streckeneinfachfehler 32 wiedergegeben.
In Reaktion auf den Streckenfehler ist hier lediglich der obere, mit einem Kreis gekennzeichnete Multiplexer 12" des zweiten Teilnehmers 1" so umgeschaltet, dass das Informationssignal aus dem anderen Kommunikationsring 20 in den Kommunikationspfad 10 in Signallaufrichtung hinter dem Streckenfehler 32 eingespeist wird.

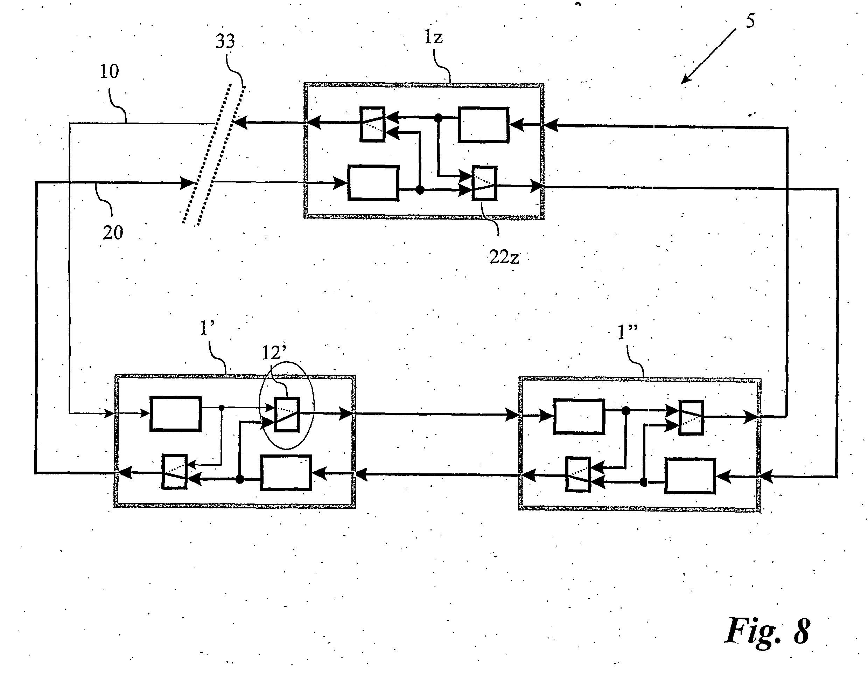

In Figur 8 ist eine weitere Rekonfigurationsschaltung des erfindungsgemäßen Kommunikationssystems 5 aus Figur 5 bei einem zwischen dem Zentralteilnehmer 1z und dem ersten Nebenteilnehmer 1' aufgetretenen Streckendoppelfehler 33 wiedergegeben. Hier ist lediglich der obere Multiplexer 12' des ersten Nebenteilnehmers 1' umgeschaltet. Da eine Weiterleitung des Informationssignals über den Zentralteilnehmer 1z hinaus hier nicht erfolgt, ist eine Umschaltung des dem Streckenfehler in Signallaufrichtung nachgeordneten Multiplexers 22z des unteren Kommunikationsrings 20 in dem Zentralteilnehmer 1z nicht erforderlich. Der Zentralteilnehmer registriert hier in dem unteren Kommunikationsring zwar den Nicht-Wiedereingang des ursprünglich gesendeten Informationssignals. Die Funktion des Kommunikationssystems ist hierdurch jedoch nicht beeinträchtigt.

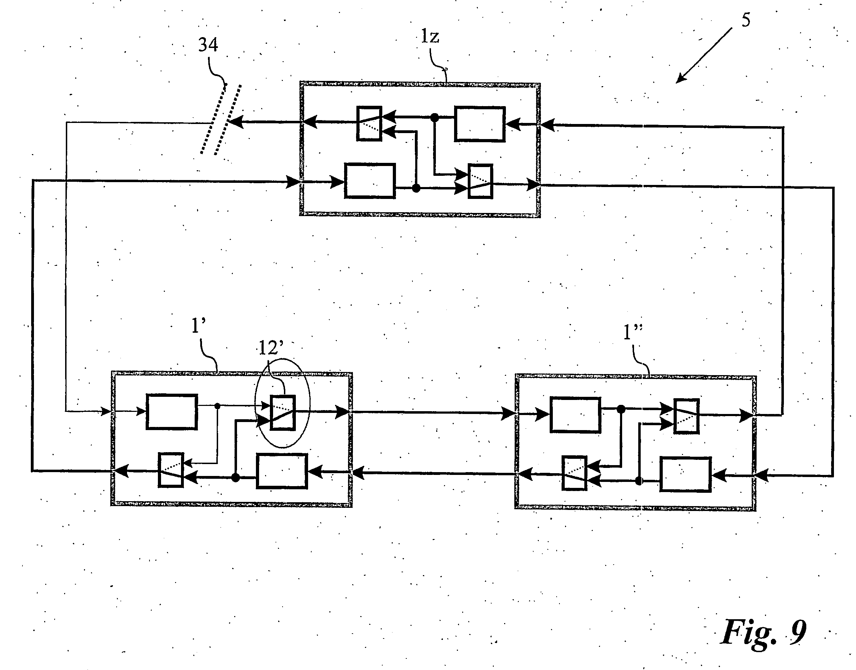

In Figur 9 ist eine weitere Rekonfigurationsschaltung des erfindungsgemäßen Kommunikationssystems aus Figur 5 bei einem zwischen dem Zentralteilnehmer 1z und dem ersten Nebenteilnehmer 1' aufgetretenen Streckeneinfachfehler 34 am Ausgang des Zentralteilnehmers wiedergegeben. In gleicher Weise wie in Figur 8 ist hier der obere Multiplexer 12' des ersten Nebenteilnehmers umgeschaltet.

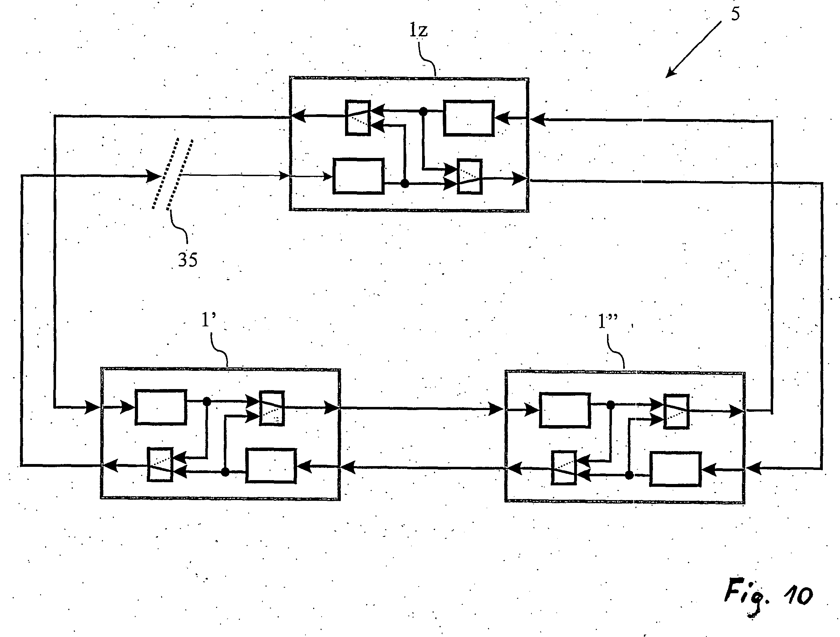

In Figur 10 ist eine weitere Rekonfigurationsschaltung des erfindungsgemäßen Kommunikationssystems aus Figur 5 bei einem zwischen dem ersten Nebenteilnehmer 1' und dem Zentralteilnehmer 1z aufgetretenen Streckeneinfachfehler 35 am Eingang des Zentralteilnehmers 1z wiedergegeben. Wie bereits zu Figur. 8 ausgeführt, findet hier keine Umschaltung eines Multiplexers statt.

## Patentansprüche

1. Teilnehmer (1) eines Kommünikationssystems mit einem ersten Kommunikationspfad (10) und einem zweiten Kommunikationspfad (20), wobei die Kommunikationspfade in dem Kommunikationssystem vorzugsweise in einer gegenläufig arbeitenden Doppelringtopologie angeordnet sind,
und der Teilnehmer (1) eine erste Verarbeiturigseüiheit (11) zur Verarbeitung von über den ersten Kommunikationspfad (10) erhaltenen Informationssignalen und/oder zur Erzeugung und Versendung von Informationssignalen über den ersten Kommunikationspfad sowie eine zweite Verarbeitungseinheit (21) zur Verarbeitung von über den zweiten Kommunikationspfad (20) erhaltenen Informationssignal,en und/oder zur Erzeugung und Versendung von Informationssignalen über den zweiten Kommunikationspfad umfasst,
und des weiteren in dem Teilnehmer eine erste aktivierbare Kopplung (13,22) zwischen dem ersten Kommunikationspfad(10) und dem zweiten Kommunikationspfad (20) so angeordnet ist, wobei bei Aktivierung der ersten aktivierbaren Kopplung Informationssignale von dem ersten Kommunikationspfad (10) abgegriffen und dem zweiten Kommunikationspfad (20) zugeführt werden, die Zuführung der ersten aktivierbaren Kopplung in dem Teilnehmer (1) in Signallaufrichtung hinter der Verarbeitungseinheit (21) des zweiten Kommunikationspfades (20) angeordnet ist, wobei die Verarbeitungseinheit (11,21) das Eingangssignal auf Vorhandensein prüft und in dem Teilnehiner(1) je Kommunikationspfad eine Phasenregelschleife zur Phasenaufbereitung des empfangenen Informationssignals vorgesehen ist,
**dadurch gekennzeichnet, dass**
der Teilnehmer (1) Zähler zur Flankenerkennung umfasst welche mittels eines Empfangsschrittaktes und einer Flanke steuerbar sind, wobei das Eingangssignal eines Teilnehmers (1) mittels der Flankenerkennung im Teilnehmer auf Vorhandensein geprüft wird, und der Teilnehmer bei fehlendem Signal an seinem Eingang einen Nullbitstrom zur Rücksetzung der Zähles von den nachfolgenden Teilnehmern erzeugt.

2. Teilnehmer nach Anspruch 1,
wobei der Abgriff der ersten aktivierbaren Kopplung in dem Teilnehmer in Signallaufrichtung hinter der Verarbeitungseinheit (11) des ersten Kommunikationspfades (10) angeordnet ist.

3. Teilnehmer nach einem der Ansprüche 1 oder 2,
wobei die erste aktivierbare Kopplung eine erste Zwischenverbindungsleitung (13) zur Verbindung des ersten Kommunikationspfades (10) mit dem zweiten Kommunikationspfad (20) und ein in die erste Zwischenverbindungsleitung (13) als auch in den zweiten Kommunikationspfad (20) zwischengeschaltetes erstes Umschaltelement (22) umfasst.

4. Teilnehmer nach Anspruch 3,
wobei das erste Umschaltelement (22) ein Multiplexer mit zwei Eingängen und einem Ausgang ist und die Eingänge selektiv auf den Ausgang schaltbar sind.

5. Teilnehmer nach einem der vorhergehenden Ansprüche,
wobei die Verarbeitungseinheiten (11,21) Mikroprozessorsysteme zur Protokollverarbeitung, vorzugsweise zur HDLC-Verarbeitung, sind.

6. Teilnehmer nach einem der vorhergehenden Ansprüche,
wobei in dem Teilnehmer(1) des weiteren eine zweite aktivierbare Kopplung (23,12) zwischen dem ersten Kömmunikationspfad, (10) und dem zweiten Kommunikationspfad(20) so angeordnet ist, dass bei Aktivierung der zweiten aktivierbaren Kopplung Informationssignale von dem zweiten Kommunikationspfad (20) abgegriffen und dem ersten Kommunikationspfad(10) zugeführt werden, wobei die Zuführung der zweiten aktivierbaren Kopplung in Signallaufrichtung hinter der Verarbeitungseinheit (11) des ersten Kommunikationspfades (10) angeordnet ist und ferner zweckmäßig der Abgriff der zweiten aktivierbaren Kopplung in dem Teilnehmer in Signallaufrichtung hinter der Verarbeitungseinheit (21) des zweiten Kommunikationspfades (20) angeordnet ist.

7. Teilnehmer nach Anspruch 6,
wobei die zweite aktivierbare Kopplung eine Zwischenverbindungsleitung (23) zur Verbindung des zweiten Kommunikationspfades (20) mit dem ersten Kömrntmikationspfad(10) und ein in die Zwischenverbindungsleitung(23) als auch in den ersten Kommunikationspfad (10) zwischengeschaltetes zweites Umschaltelement (12) umfasst, und das zweite Umschaltelement (12) zweckmäßig ein Multiplexer mit zwei Eingängen und einem Ausgang ist und die Eingänge selektiv auf den Ausgang schaltbar sind.

8. Teilnehmer nach einem der vorhergehenden Ansprüche,
wobei in dem Teilnehmer je Kommunikationspfad ein Empfänger, vorzugsweise ein optischer Empfänger, zum Empfang und Einkoppelnder Informationssignale aus dem Kommunikationspfad in den Teilnehmer vorgesehen ist.

9. Teilnehmer nach einem der vorhergehenden Ansprüche,
wobei in dem Teilnehmer je Kommunikationspfad eine Auskopplungseinheit, vorzugsweise eine Leuchtdiode mit Ansteuerschaltung, zum Auskoppeln der Informationssignale aus dem Teilnehmer in den Kommunikationspfad vorgesehen ist.

10. Teilnehmer nach einem der vorhergehenden Ansprüche,
wobei der Teilnehmer in Nebehteilnehmer (1', 1") des Kommunikationssystems ist.

11. Teilnehmer nach einem der vorhergehenden Ansprüche,
wobei der Teilnehmer ein Zentralteilnehmer (1z) des Kommunikationssystems ist.

12. Teilnehmer nach einem der vorhergehenden Ansprüche,
wobei der Teilnehmer in einen Aktuator und/oder einen Sensor, bevorzugt in ein Antriebssteuergerät, besonders bevorzugt in ein Antriebssteuergerät eines Stellmotors, integriert ist.

13. Kommunikationssystem (5) zur gerichteten Kommunikation zwischen Teilnehmern des Kommunikationssystems, mit einem Zentralteilnehmer(lz)und zumindest einem Nebenteilnehmer(1',1 "), wobei zumindest einer der Teilnehmer gemäß einem der Ansprüche 1 bis 2 ausgeführt ist.

14. Kommunikationssystem nach Anspruch 13,
wobei das Kommunikationssystem in Doppelringtopologie mit zwei, jeweils ringförmig geschlossenen Kommunikationspfaden (10, 20) ausgeführt ist.

15. Kommunikationssystem nach Anspruch 14,
wobei der Informationssignallauf in den zwei Kommunikationspfaden gegenläufig erfolgt.

16. Kommunikationssystem nach einem der Ansprüche 13 bis 15,
wobei die Teilnehmer über Lichtwellenleiter miteinander verbunden sind.

17. Kommunikationssystem nach einem der Ansprüche 13 bis 16, wobei das Kommunikationssystem ein dezentrales Steuerungssystem mit einer Master-Slave-Struktur, vorzugsweise zur Steuerung und Regelung einer Mehrzahl von Stellmotoren, ist.

## Claims

1. User (1) of a communication system comprising a first communication path (10) and a second communication path (20), wherein the communication paths in the communication system are preferably arranged in a dual-ring topology working in opposite directions,
and the user (1) comprises a first processing unit (11) for processing information signals obtained via the first communication path (10) and/or for generating and sending out information signals via the first communication path and a second processing unit (21) for processing information signals obtained via the second communication path (20) and/or for generating and sending out information signals via the second communication path,
and, furthermore, in the user, a first activatable coupling (13, 22) is arranged between the first communication path (10) and the second communication path (20), wherein, on activation of the first activatable coupling, information signals are picked up from the first communication path (10) and supplied to the second communication path (20), the supply of the first activatable coupling is arranged in the direction of signal travel behind the processing unit (21) of the second communication path (20) in the user (1), wherein the processing unit (11, 21) checks the input signal for presence and in the user (1), a phase-locked loop for processing the phase of the received information signal is provided for each communication path, **characterized in that** the user (1) comprises counters for edge detection which can be controlled by means of a receive element timing and an edge, wherein the input signal of a user (1) is checked for presence by means of the edge detection in the user and the user, when the signal is missing at its input, generates a zero bit stream for resetting the counters of the subsequent users.

2. User according to Claim 1, wherein the tap of the first activatable coupling in the user is arranged behind the processing unit (11) of the first communication path (10) in the direction of signal travel.

3. User according to one of Claims 1 or 2, wherein the first activatable coupling comprises a first interconnection line (13) for connecting the first communication path (10) to the second communication path (20) and a first switching element (22) interposed in the first interconnection line (13) and into the second communication path (20).

4. User according to Claim 3, wherein the first switching element (22) is a multiplexer having two inputs and one output and the inputs can be selectively switched to the output.

5. User according to one of the preceding claims, wherein the processing units (11, 21) are microprocessor systems for protocol processing, preferably for HDLC processing.

6. User according to one of the preceding claims, wherein in the user (1), a second activatable coupling (23, 12) is furthermore arranged between the first communication path (10) and the second communication path (20) in such a manner that on activation of the second activatable coupling, information signals are picked up from the second communication path (20) and are supplied to the first communication path (10), wherein the supply of the second activatable coupling is arranged behind the processing unit (11) of the first communication path (10) in the direction of signal travel and furthermore the tap of the second activatable coupling in the user is suitably arranged behind the processing unit (21) of the second communication path (20) in the direction of signal travel.

7. User according to Claim 6, wherein the second activatable coupling comprises an interconnection line (23) for connecting the second communication path (20) to the first communication path (10) and a second switching element (12) interposed in the interconnection line (23) and into the first communication path (10) and the second switching element (12) is suitably a multiplexer having two inputs and one output and the inputs can be selectively switched to the output.

8. User according to one of the preceding claims, wherein, in the user, a receiver, preferably an optical receiver, for receiving and coupling-in of the information signals from the communication path into the user is provided for each communication path.

9. User according to one of the preceding claims, wherein, in the user, a coupling-out unit, preferably a light-emitting diode with drive circuit, is provided for coupling the information signals out of the user into the communication path, for each communication path.

10. User according to one of the preceding claims, wherein the user is a slave station (1', 1") of the communication system.

11. User according to one of the preceding claims, wherein the user is a master station (1z) of the communication system.

12. User according to one of the preceding claims, wherein the user is integrated in an actuator and/or a sensor, preferably in a drive controller, particularly preferably in a drive controller of a servomotor.

13. Communication system (5) for the directional communication between , users of the communication system, comprising a master station (1z) and at least one slave station (1', 1"), wherein at least one of the users is arranged according to one of Claims 1 to 2.

14. Communication system according to Claim 13, wherein the communication system is arranged in dual-ring topology having two communication paths (10, 20) in each case closed in the form of a ring.

15. Communication system according to Claim 14, wherein the information signal travels in opposite directions in the two communication paths.

16. Communication system according to one of Claims 13 to 15, wherein the users are connected to one another via optical waveguides.

17. Communication system according to one of Claims 13 to 16, wherein the communication system is a decentralized control system having a master-slave structure, preferably for the open- and closed-loop control of a multiplicity of servomotors.

## Revendications

1. Participant (1) à un système de communication comprenant un premier chemin de communication (10) et un second chemin de communication (20),
les chemins de communication du système de communication étant installés de préférence suivant une topologie à double anneau à circulation opposée,
et le participant (1) comprend une première unité de traitement (11) pour traiter les signaux d'informations reçus par le premier chemin de communication (10) et/ou pour générer et envoyer des signaux d'informations par le premier chemin de communication ainsi qu'une seconde unité de traitement (21) pour traiter les signaux d'informations reçus par le second chemin de communication (20) et/ou pour générer et envoyer les signaux d'informations par le second chemin de communication,
et en outre dans le participant, il y a un premier couplage activable (13, 22) entre le premier chemin de communication (10) et le second chemin de communication (20), installé de façon qu'en activant le premier couplage activable on puisse prélever des signaux d'informations du premier chemin de communication (10) et les appliquer au second chemin de communication (20), la fourniture du premier couplage activable dans le participant (1) se situant en aval de l'unité de traitement (21) du second chemin de communication (20), dans le sens de circulation des signaux,
l'unité de traitement (11, 21) vérifiant la présence du signal d'entrée et dans le participant (1), par chemin de communication, il y a une boucle de régulation de phase pour préparer la phase du signal d'informations reçu,
**caractérisé en ce que**
le participant (1) comprend des compteurs pour détecter des flancs qui sont commandés par une cadence de pas de réception d'un flanc,
le signal d'entrée d'un participant (1) étant vérifié quant à sa présence dans le participant, par une détection de flanc et en l'absence de signal, le participant génère un flux de bits zéro pour remettre à zéro les compteurs des participants suivants.

2. Participant selon la revendication 1,
selon lequel
la prise du premier couplage activable dans le participant se situe en aval de l'unité de traitement (11) du premier chemin de communication (10) dans le sens de passage des signaux.

3. Participant selon l'une des revendications 1 ou 2,
dans lequel
le premier couplage activable comporte une première ligne de liaison intermédiaire (13) pour relier le premier chemin de communication (10) au second chemin de communication (20) et un premier élément de commutation (22) branché dans la première ligne de liaison intermédiaire (13) et aussi dans le second chemin de communication (20).

4. Participant selon la revendication 3,
dans lequel
le premier élément de commutation (22) est un multiplexeur à deux entrées et une sortie, les entrées étant commutées de manière sélective sur la sortie.

5. Participant selon l'une des revendications précédentes,
selon lequel
les unités de traitement (11, 21) sont des systèmes de microprocesseurs pour le traitement par protocole, de préférence pour le protocole HDLC.

6. Participant selon l'une des revendications précédentes,
selon lequel
dans le participant (1) il y a en outre un second couplage activable (23, 12) entre le premier chemin de communication (10) et le second chemin de communication (20) de façon qu'en activant le second couplage activable, on prélève des signaux d'informations du second chemin de communication (20) pour les fournir au premier chemin de communication (10), la disposition du second couplage activable se situant en aval de l'unité de traitement (11) du premier chemin de communication (10) dans le sens de passage des signaux et en outre la prise du second couplage activable est située derrière l'unité de traitement (21) du second chemin de communication (20), dans le sens de passage des signaux.

7. Participant selon la revendication 6,
selon lequel
le second couplage activable comporte une ligne de liaison intermédiaire (23) pour relier le second chemin de communication (20) au premier chemin de communication (10) et à un second élément de commutation (12) branché dans la ligne de liaison intermédiaire (23) et aussi dans le premier chemin de communication (10) et le second élément de commutation (12) est un multiplexeur à deux entrées et une sortie, les entrées étant commutées sélectivement sur la sortie.

8. Participant selon l'une des revendications précédentes,
selon lequel
par chemin de communication le participant comporte un récepteur, de préférence un récepteur optique pour recevoir et injecter des signaux d'informations du chemin de communication dans le participant.

9. Participant selon l'une des revendications précédentes,
selon lequel
par chemin de communication le participant comporte une unité de découplage, de préférence une photodiode équipée d'un circuit de commande pour découpler les signaux d'informations du participant dans le chemin de communication.

10. Participant selon l'une des revendications précédentes,
selon lequel
le participant est un participant auxiliaire (1', 1'l dans le système de communication.

11. Participant selon l'une des revendications précédentes,
selon lequel
le participant est un participant central (1z) du système de communication.

12. Participant selon l'une des revendications précédentes,
selon lequel
le participant est un actionneur et/ou un capteur, de préférence dans un appareil de commande d'entraînement notamment dans l'appareil de commande d'entraînement d'un moteur d'actionneur.

13. Système de communication (5) pour une communication orientée entre les participants du système de communication comprenant un participant central (1z) et au moins un participant auxiliaire (1', 1"), au moins l'un des participants est réalisé selon l'une des revendications 1-2.

14. Système de communication selon la revendication 13,
selon lequel
le système de communication est réalisé suivant une topologie à double anneau avec deux chemins de communication (10, 20) fermés chaque fois en anneau.

15. Système de communication selon la revendication 14,
selon lequel
le passage du signal d'informations se fait en sens opposé dans les deux chemins de communication.

16. Système de communication selon l'une des revendications 13 à 15,
selon lequel
les participants sont reliés par des guides de lumière.

17. Système de communication selon l'une des revendications 13 à 16,
selon lequel
le système de communication est un système de commande décentralisé ayant une structure maitre/esclave, de préférence pour commander et réguler un ensemble de moteurs d'actionneurs.
